Europäisches Patentamt

European Patent Office

Office européen des brevets

(11) Publication number: **0 051 446**
**A1**

(12) **EUROPEAN PATENT APPLICATION**

(21) Application number: **81305105.9**

(22) Date of filing: **28.10.81**

(51) Int. Cl.³: **H 04 Q 3/00**
**H 04 M 19/02**

(30) Priority: **28.10.80 GB 8034608**

(43) Date of publication of application:
**12.05.82 Bulletin 82/19**

(84) Designated Contracting States:
**DE FR GB IT SE**

(71) Applicant: **BRITISH TELECOMMUNICATIONS**
**2-12 Gresham Street**
**London E2V 7AG(GB)**

(72) Inventor: **Lyne, Francis Terence**
**Yew Tree Cottage Pitmans Corner Wetheringsett**
**Stowmarket Suffolk IP14 5PX(GB)**

(74) Representative: **Smith, Norman Ian et al,**
**F.J. CLEVELAND & COMPANY 40-43 Chancery Lane**
**London WC2A 1JQ(GB)**

(54) Improvements in or relating to line interface circuits.

(57) A line interface circuit for a telephone exchange comprises a transmission bridge 10, and loop detector 14 and ring current generator 20 and -V. The ring current generator is arranged to produce a ringing voltage which is offset relative to the voltage of the line current feed for the associated telephone line.

FIG.1

EP 0 051 446 A1

Croydon Printing Company Ltd.

- 2 -

DESCRIPTION

This invention relates to line interface circuits which are used in telephone systems.

Line interface circuits are used in telephone exchanges. They generally include a transmission bridge for isolating direct current signals flowing on one side of the exchange from those on the other side whilst providing a low loss transmission path for speech signals through the exchange, a loop detector for detecting the establishment of a loop on a telephone line and a ring current generator for supplying ringing current to the telephone of a called subscriber.

Ring current generators of conventional interface circuits normally employ relays for switching ringing current to line. The ringing current voltage generally overlaps the line feed voltage range on the telephone line. Also the line interface circuits which use such ring current generators require separate loop detectors for the ringing condition and for the loop disconnect pulsing condition.

The present invention provides a line interface circuit which does not require relays for switching ringing current to line and in which a single loop detector can be used for both the ringing and loop disconnect conditions.

According to the present invention there is provided a line interface circuit for a telephone exchange comprising a transmission bridge, a loop detector and a ring current generator wherein the ring current generator is arranged to produce a ringing voltage which is offset relative to the voltage of the line current feed for the associated telephone line.

The ring current generator may comprise a voltage supply and a switch for connecting the voltage supply to a telephone line. The voltage supply may be a d.c. supply and the switch may be an electronic switch which can be pulsed at a given frequency. The switch may include a switching transistor.

The ring current generator may include a transistor which is arranged to switch on and off in response to ring control pulses, and a resistor-capacitor network arranged so that the capacitor successively charges and discharges as said transistor switches on and off to produce a slew rate limited square wave which is fed to the telephone line.

The interface circuit may include a switch which is associated with both the A and B legs of a telephone line, the generator being arranged to provide a balanced ringing signal to said legs with a voltage offset from the line feed voltage on each leg.

The invention will be described now by way of example only with particular reference to the accompanying drawings.  In the drawings:

Figure 1 is a schematic circuit diagram of a line interface circuit in accordance with the present invention;

Figure 2 is a detailed circuit diagram of the circuit of Figure 1;

Figure 3 is a waveform diagram illustrating the operation of the circuit of Figures 1 and 2;

Figure 4 is a circuit diagram showing an alternative form of line interface circuit, and

Figure 5 is a waveform diagram illustrating the operation of the circuit of Figure 4.

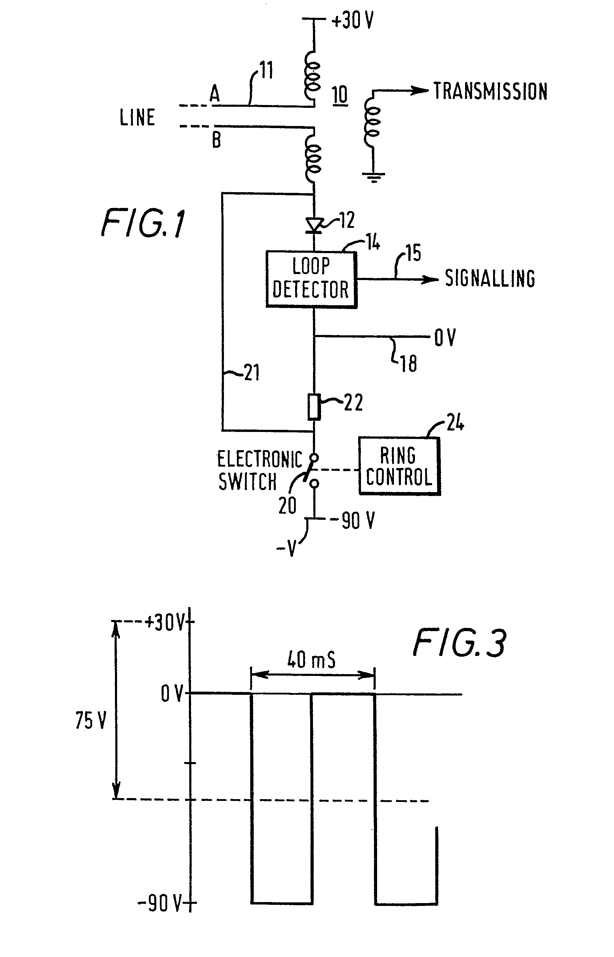

The line interface circuit shown in Figure 1 is located in a telephone exchange . and one such circuit is provided for each telephone serviced by the exchange. The circuit can be used in the exchange described in U.K. Patent Application No. 8034608.

The interface circuit comprises a transformer 10 which acts as a transmission bridge for feeding bias current to the telephone line 11 from a +30 V supply.

The transformer 10 is connected by a diode 12 to a loop detector 14. The loop detector 14 is arranged to sense the condition of a subscriber's line and provide appropriate signalling information on a line 15. The loop detector is connected to a line 18 which is at OV.

A ring current generator includes a voltage source -V which is connected by an electronic switch 20 and a line 21 to the transformer 10. A resistor 22 connects the switch 20 to the line 18. The switch 20 is arranged to operate under the control of a ring control circuit 24.

In operation when the telephone associated with the interface circuit is "off-hook", current flows from the +30 V supply through the transmission bridge 10, telephone instrument and diode 12 to line 18 via the loop detector 14. The loop detector 14 provides an output which is a digital signal that follows the loop-disconnect pulsing of the telephone dial.

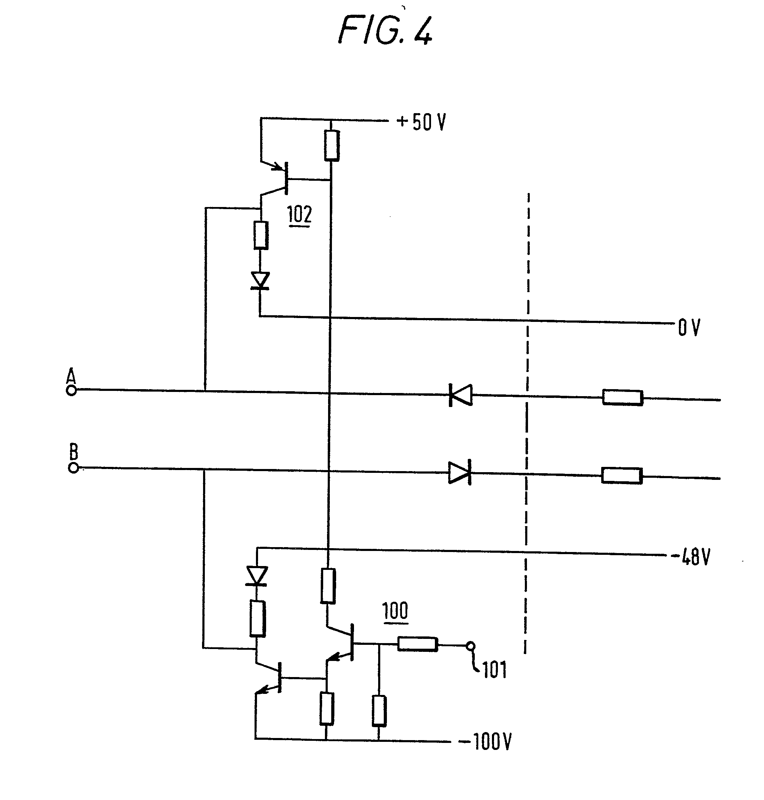

When it is required to send ring current to a telephone line, the ring control circuit 24 causes the switch 20 to open and close at 25 Hz. When the switch 20 is closed -90 V is connected directly to the B leg of the telephone line via line 21. When the switch 20 is open the B leg of the line is connected to 0V via resistor 22. As a telephone instrument has a capacitor in series with its bell no net current can flow from the +30 V supply through the loop detector until the telephone is answered. Thus the ringing current comprises a 90 V peak to peak 25 Hz waveform as shown in Figure 3. The diode 12 prevents the ringing current being applied to the loop detector 14. It will be seen that the waveform has a DC offset relative to the line current supply (+30 V) of 75 V and the entire ring current waveform lies outside the voltage range used
for line current feed. It will be noted that
the ring current generator does not require
relays which are used in conventional ring
current generators. Furthermore because
of the offset feature described above a
single loop detector can be used during
ringing or during loop-disconnect pulsing
on the telephone line and loop detectors
dedicated specifically to the ring function
are not required.

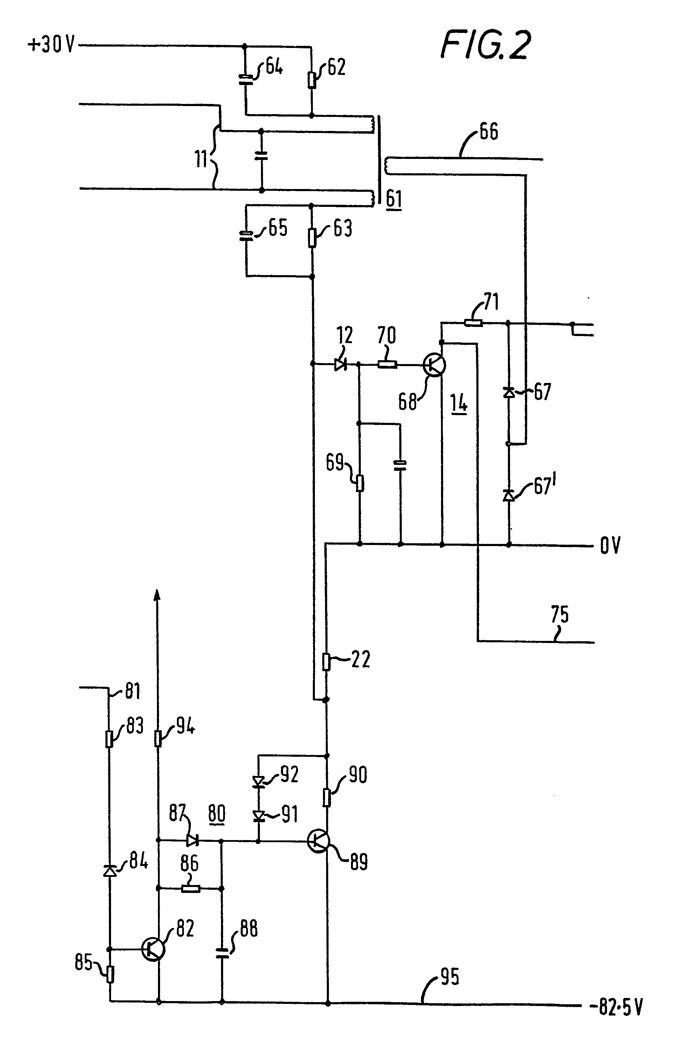

The circuit shown in Figure 1 will
now be described in detail with reference
to Figure 2. The circuit as shown in Figure 2
forms part of an internal telephone exchange
having a number of telephone extensions. The
exchange is described in detail in U.K. Patent
Application No. 8034608. The circuit shown in
Figure 2 is connected to a telephone extension
by a two-wire line illustrated at 11. The
two-wire line is connected to a balanced
transmission bridge which comprises a
transformer 61, resistors 62, 63 and capacitors
64, 65. The resistors 61 and 62 limit the line current supplied to an extension to approximately 80 mA for a short circuited line and the capacitors 64, 65 are decoupling capacitors. The output from the transmission bridge shown at 66 provides an unbalanced speech path for speech signals passing through the exchange. Diodes 67, 67' maintain signal levels on the unbalanced paths 66 within a predetermined range to protect analogue speech switches in the exchange.

A transistor 68 and resistors 69, 70 and 71 form the loop detector 14 for detecting a loop which is established when an extension handset is lifted. Under normal loop conditions current flows through the transmission bridge 61 via the diode 12 into the loop detector. A line current of sufficient magnitude (greater than 15 mA) causes a voltage drop across the resistor 69 which causes the transistor 68 to switch from a non-conductive to a conductive condition. The output from the loop detector then changes from + 15 volts (logic 1) to 0 volts (logic 0) which is indicative of a loop condition being present.

Ring current for a particular extension is supplied via a circuit shown generally at 80. This circuit has an input 81 which receives ring current pulses from the ring control circuit 24 in the digital part of the exchange. The input 81 is connected to the base of a transistor 82 via a voltage level shifting network consisting of a resistor 83, diode 84 and a resistor 85. The collector circuit of the transistor 82 comprises resistors 86 and 94, diode 87 and a capacitor 88 and is connected to the base of a transistor 89. The emitter of the transistor 89 is connected by a resistor 90 to the transmission bridge 11. Diodes 91 and 92 are connected in series between the base of the transistor 89 and its emitter circuit.

The input on line 81 comprises 25 Hz logic pulses which are generated at the digital part of the exchange when a party calls the extension associated with the interface circuit. The transistor 82 continuously switches from a conductive to a non-conductive state in response to these logic pulses. During each 20 m sec that transistor 82 is conductive the capacitor 88 discharges via resistor 86 and during each 20 m sec that the transistor 82 is non-conductive the capacitor 88 charges to 112.5 volts via the diode 87 and a resistor 94. As the power line 95 is at -82.5 volts this means that during ringing a 112.5 V peak slew rate limited square wave is present across the capacitor 88. This wave form is applied to the transistor 89 and fed out to the appropriate telephone line 60 via the transmission bridge 61.

The diodes 91 and 92 and the resistor 90 limit the current through the transistor 89 to approximately 40 milli amps during short circuit line conditions. The diode 12 prevents the ringing voltage being applied to the loop detector transistor 68.

It will be noted that the circuit 80 for supplying ring current does not employ any relays but it is simply made up from solid state switching components.

It will be appreciated that the circuit described with reference to Figures 1 and 2 is only one example of the present technique. The +30 V supply shown in Figure 1 could be replaced by a negative voltage [e.g. - 50 V as used in the Public Switched Network (PSN)] , the -90V replaced by a suitable positive voltage, and the diode 12 reversed to allow the principle to be applied to the PSN. It should also be noted that the -90 V supply could be replaced by a suitable A C waveform in which case it is not necessary to pulse the switch 20 during ringing.

An example of how an interface circuit of a PSN exchange can be modified according to the present technique is shown in Figure 4. The interface circuit is provided with a first transistor switch 100 which is arranged to switch the B wire of the telephone line between -48 V and -100 V in response to ring current control pulses applied to the terminal 101. The circuit includes a second transistor switch 102 which is arranged to switch the A wire of the telephone line between 0 and +50 V in response to the pulses applied to the terminal 101.

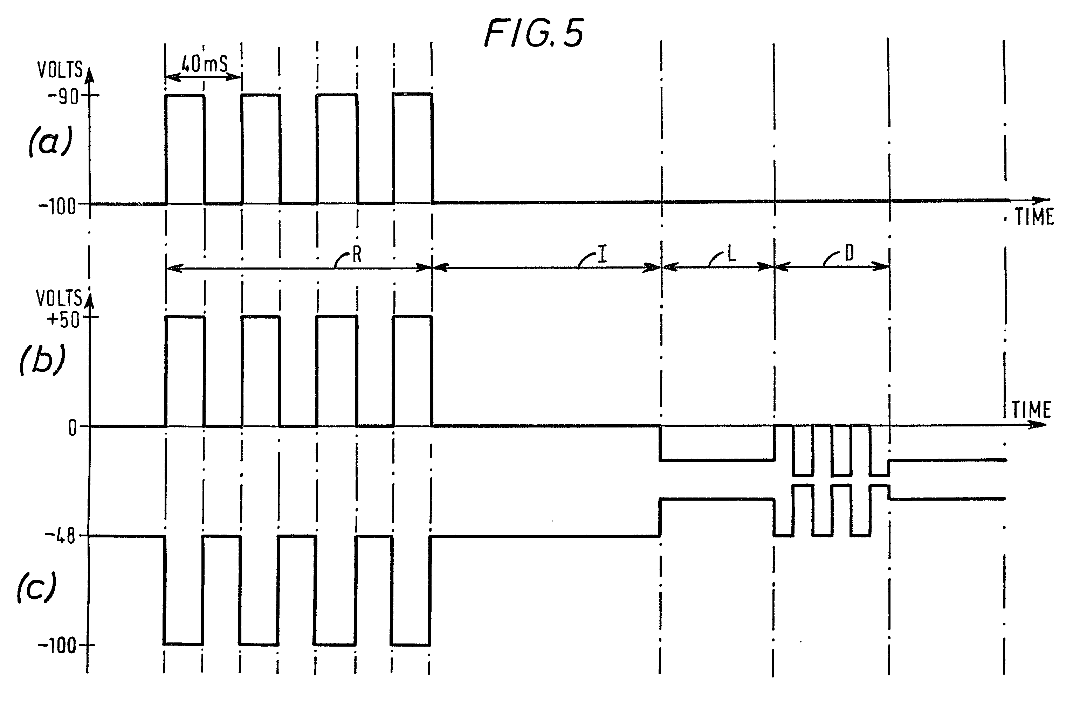

The circuit shown in Figure 4 provides a balanced ringing signal the voltage of which is offset from the line feed voltage. The operation of the circuit can be seen from the waveforms of Figure 5. Waveform (a) represents the

*FIG.1*

*FIG.3*

FIG.2

FIG. 4

0051446

3/4

FIG.5

0051446

<table>
<tr><td colspan="2">European Patent Office</td><td>EUROPEAN SEARCH REPORT</td><td>Application number<br>EP 81 30 5105</td></tr>
</table>

## DOCUMENTS CONSIDERED TO BE RELEVANT

| Category | Citation of document with indication, where appropriate, of relevant passages | Relevant to claim |
|---|---|---|
| Y | <u>US - A - 3 941 941</u> (SIMOKAT)<br>* Column 2, line 19 to column 6, line 29 * | 1 |
| Y | <u>FR - A - 2 138548</u> (IBM)<br>* Page 3, line 22 to page 6, line 9*<br>& GB - A - 138 358 | 1 |
| A | <u>FR - A - 2 437 121</u> ( SOCIETE DES TELEPHONES STE THOMSON ERICSSON)<br>* Complete document * | 1,2,6,<br>7 |
| P | <u>FR - A - 2 466 923</u> (LE MATERIEL TELEPHONIQUE THOMSON-CSF)<br>* Page 4, line 28 to page 7, line 15; page 9, line 34 to page 10, line 1 * | 1-4,6 |
| P | <u>FR - A - 2 465 379</u> (ISKRA-SOZO ELEKTROKOVINSKE)<br>* Page 2, lines 1-21 * | 1 |
| P | <u>EP - A - 0 034 384</u> (PHILIPS)<br>* Complete document * | 1-8 |

---

**CLASSIFICATION OF THE APPLICATION (Int. Cl. 3)**

H 04 Q   3/00
H 04 M  19/02

**TECHNICAL FIELDS SEARCHED (Int.Cl. 3)**

H 04 M  19/02

**CATEGORY OF CITED DOCUMENTS**

X: particularly relevant if taken alone
Y: particularly relevant if combined with another document of the same category
A: technological background
O: non-written disclosure
P: intermediate document
T: theory or principle underlying the invention
E: earlier patent document, but published on, or after the filing date
D: document cited in the application
L: document cited for other reasons

&: member of the same patent family, corresponding document

---

The present search report has been drawn up for all claims

| Place of search | Date of completion of the search | Examiner |
|---|---|---|
| The Hague | 19-01-1982 | VERSLYPE |

EPO Form 1503.1   06.78